(19) Europäisches Patentamt
European Patent Office
Office européen des brevets

(11) **EP 0 712 769 B1**

(12) **FASCICULE DE BREVET EUROPEEN**

(45) Date de publication et mention
de la délivrance du brevet:
**05.04.2000 Bulletin 2000/14**

(51) Int Cl.⁷: **B60T 7/20**, B60T 13/66

(21) Numéro de dépôt: **95402580.5**

(22) Date de dépôt: **17.11.1995**

(54) **Procédé et dispositif de contrôle du freinage d'une remorque**

Verfahren und Vorrichtung zur Regelung des Anhängerbremsens

Procedure and device for controlling trailer braking

(84) Etats contractants désignés:
**BE DE GB IT NL**

(30) Priorité: **18.11.1994 FR 9413832**

(43) Date de publication de la demande:
**22.05.1996 Bulletin 1996/21**

(73) Titulaire: **RENAULT VEHICULES INDUSTRIELS**
**69003 Lyon (FR)**

(72) Inventeur: **Carneiro Esteves, Armando**
**F-69300 Caluire (FR)**

(74) Mandataire: **Fernandez, Francis Lionel et al**
**Renault,**
**Technocentre,**
**S.0267 - TCR AVA 0-56,**
**1 avenue du Golf**
**78288 Guyancourt (FR)**

(56) Documents cités:
**EP-A- 0 292 687         EP-A- 0 603 493**
**DE-A- 4 003 316**

**Description**

La présente invention concerne le contrôle du freinage d'une remorque appartenant à un convoi routier, notamment du type semi-remorque, tel que décrit dans le document EP-A- 0 292 687. Elle a pour objet un dispositif et un procédé visant à piloter en permanence la force de freinage appliquée sur les roues d'une remorque, en fonction de la décélération et de l'inertie de celle-ci, afin d'adapter son comportement à celui du véhicule de traction. Le procédé et le dispositif proposés par l'invention sont destinés à compenser les différences de freinage entre le tracteur et la remorque, dues notamment à un vieillissement ou au mauvais entretien d'un des systèmes de freinage.

Le contrôle du freinage d'une remorque est généralement effectué à l'aide de capteurs d'efforts du type à jauges de contraintes, mesurant les efforts exercés par la remorque sur ses organes d'attelage pendant le freinage. La publication WO 91/12160 décrit notamment un système de contrôle de freinage comportant un capteur d'effort, disposé au niveau de la barre d'attelage de la remorque. Ce capteur est destiné à évaluer les efforts transmis par la remorque au cours du freinage, et à fournir à son système de commande de freinage une consigne visant à réduire à zéro ses efforts horizontaux sur la barre d'attelage.

Le système de contrôle de freinage décrit dans la publication WO 91/12160, sensible aux effets longitudinaux de traction et de poussée de la remorque ne tient pas compte des forces verticales exercées par celle-ci sur son point d'attelage. Par suite, ce dispositif ne s'applique pas aux convois du type semi-remorque.

Dans le cas d'un convoi constitué d'un tracteur et d'un semi-remorque, le freinage est parfaitement équilibré entre le tracteur et la remorque, lorsque le rapport FH/FV (force horizontale sur force verticale exercées par la remorque sur la sellette) est égal au rapport x"/g (décélération du convoi sur la gravité).

Il a déjà été proposé d'équiper les sellettes d'attelage, de dispositifs à jauges de contraintes ou piezo-électriques, pour permettre la mesure individuelle de FH (force horizontale) et de FV (force verticale). Toutefois, ces systèmes sont limités aujourd'hui à des applications de laboratoires, car les techniques mises en oeuvre sont difficilement industrialisables et trop coûteuses pour une application en série sur des véhicules industriels. C'est pourquoi d'autres systèmes ont été étudiés par les constructeurs.

Par la publication EP 0 374 484 on connaît notamment un système de contrôle de freinage dont l'objectif d'équilibrer le freinage entre le tracteur et la semi-remorque c'est-à-dire d'obtenir FH/FV = x"/9, à partir d'un ensemble de mesures de charges sur l'essieu avant et arrière du tracteur, et de la décélération. Ce système de contrôle est cependant imprécis, car il résulte d'une évaluation indirecte de FH/FV. Compte tenu de la sensibilité nécessaire, le système décrit par la publication EP 0 374 484 est donc difficilement applicable.

La publication WO 91/09758 décrit un autre système de contrôle de freinage de la remorque sans mesure des efforts FH et FV, où seule la charge mesurée de l'essieu arrière ainsi que la décélération sont mesurés. L'évaluation de FH/FV est donc indirecte, et ce système présente les mêmes inconvénients que celui de la publication EP 0 374 484. De plus, il présente le risque de ne plus assurer sa fonction en cas de dérive du freinage du tracteur, pour cause d'échauffement et de détérioration des freins.

La présente invention vise à préserver l'adhérence d'une remorque en équilibrant en permanence son freinage avec celui de son véhicule de traction.

Elle propose un procédé de contrôle du freinage d'une remorque de véhicule routier, caractérisé en ce qu'on impose au système de freinage de la remorque une consigne déterminée par une mesure directe du rapport entre l'effort horizontal et l'effort vertical exercés par celle-ci sur son système d'attelage.

Conformément à l'invention, le rapport de l'effort vertical à l'effort horizontal est déterminé directement par la mesure du déplacement angulaire $\alpha$, d'un élément d'articulation entraîné en rotation par la remorque, autour d'un axe fixe par rapport au véhicule de traction.

Le déplacement angulaire $\alpha$ peut notamment être déterminé par la mesure du déplacement horizontal ou vertical d'un point fixe par rapport au premier élément d'articulation.

L'invention a également pour but d'imposer au système de freinage de la remorque une consigne de commande appropriée.

Elle propose à cet effet d'agir sur le système de freinage de la remorque en vue d'établir une relation appropriée entre l'accélération de la pesanteur, et la décélération de la remorque.

L'invention a également pour objet un dispositif permettant le contrôle du freinage d'une remorque. Ce dispositif est caractérisé en ce qu'il comporte au moins un premier élément d'articulation tournant autour d'un premier axe horizontal, ou axe primaire, fixe par rapport au véhicule de traction, solidaire d'un second élément d'articulation qui autorise le débattement de la remorque autour d'un second axe horizontal, ou axe secondaire, décalé par rapport à l'axe primaire, en entraînant en rotation le premier élément d'articulation autour de l'axe primaire.

Selon une caractéristique de l'invention, ce dispositif peut comporter un capteur de déplacement présentant un point d'accrochage fixe par rapport au véhicule tracteur et un point d'accrochage mobile, fixe par rapport au premier élément d'articulation, ou une biellette de commande articulée sur le premier élément d'articulation et agissant directement sur un composant du système de commande de freinage de la remorque, installé sur le tracteur.

Elle prévoit également d'éloigner le point d'accrochage mobile du capteur ou de la biellette, de l'axe primaire à l'aide d'un levier rapporté sur le premier élément d'articulation.

Conformément à un premier mode de réalisation de l'invention, les premiers éléments peuvent être constitués par des rouleaux engagés dans des paliers solidaires du véhicule de traction, tandis que les seconds éléments d'articulation sont constitués par au moins un arbre s'étendant latéralement à partir des rouleaux.

L'invention propose également un second mode de réalisation du dispositif de contrôle, selon lequel les premiers éléments d'articulation sont constitués par des arbres engagés dans des paliers solidaires du véhicule de traction, et les seconds éléments d'articulation sont également constitués par des arbres, décalés axialement par rapport aux premiers.

D'autres caractéristiques et avantages de l'invention apparaîtront clairement à la lecture de la description suivante d'un mode de réalisation particulier de celle-ci, en liaison avec les dessins annexés sur lesquels :

- les figures 1 et 2A et 2B illustrent l'état de la technique connue,

- les figures 3A à 6B représentent différents dispositifs d'attelage de remorque, conformes à l'invention,

- la figure 7 met en évidence la cinématique de ces dispositifs,

- la figure 8 précise l'emplacement des moyens de mesure, mis en oeuvre,

- la figure 9 propose de relier directement le dispositif aux moyens de commande du système de freinage, et

- la figure 10 propose des moyens d'amplification de mouvement, permettant d'augmenter la précision des mesures.

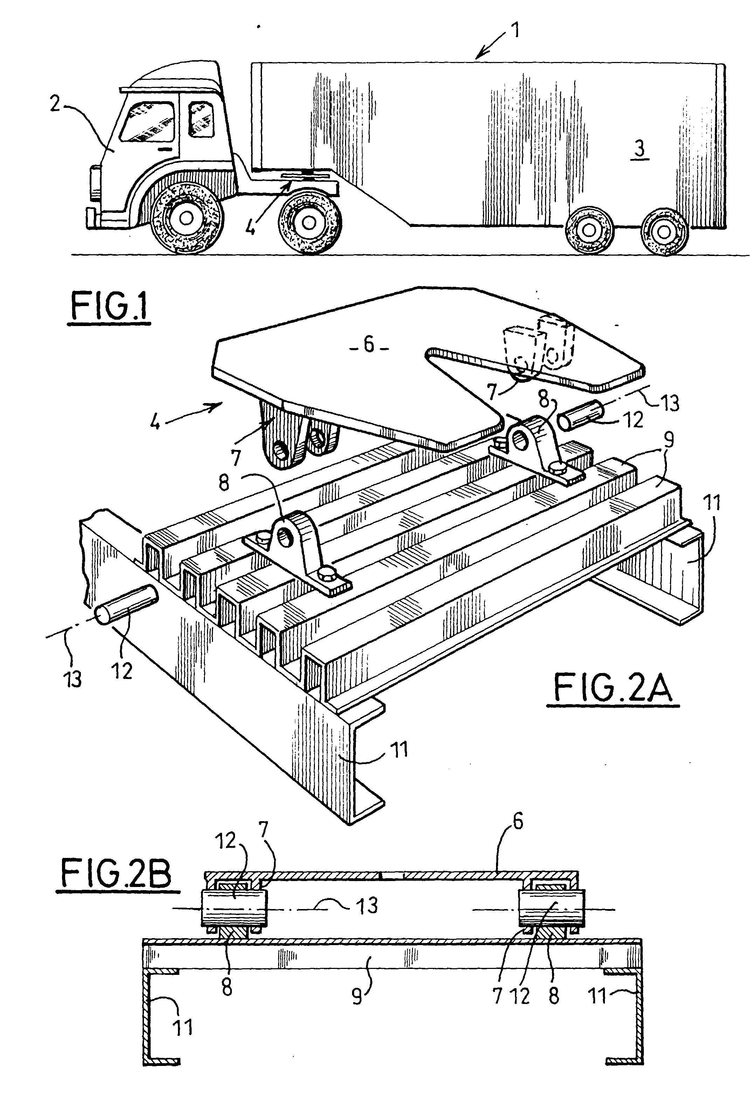

Sur la figure 1, on a représenté un convoi routier 1 du type semi-remorque, constitué d'un véhicule de traction 2 et d'une remorque 3, réunis par des moyens d'attelage, ou sellette 4, agrandis sur la figure 2. La figure 2 représente une sellette connue, comportant une semelle 6 fixée sous la remorque 3. L'appui de sellette 6 présente sur sa face inférieure deux chapes 7, coopérant avec des paliers 8 fixés sur un plancher 9 rapporté sur les longerons 11 du véhicule 2, pour retenir deux rouleaux 12 assurant la liaison mécanique du véhicule 2 et de la remorque 3, en autorisant le débattement de celle-ci autour de l'axe horizontal 13.

Le système d'attelage des figures 2A et 2B et celui des figures suivantes n'ont cependant pas de caractère restrictif quant à la disposition des chapes et des paliers sur le véhicule. En effet, il existe des systèmes d'attelage dans lesquels les paliers sont solidaires de l'appui de sellette et les chapes sont solidaires du tracteur. Bien qu'illustrée par des figures correspondant comme les figures 2A et 2B à premier type de système d'attelage mentionné ci-dessus, l'invention s'applique donc également au second.

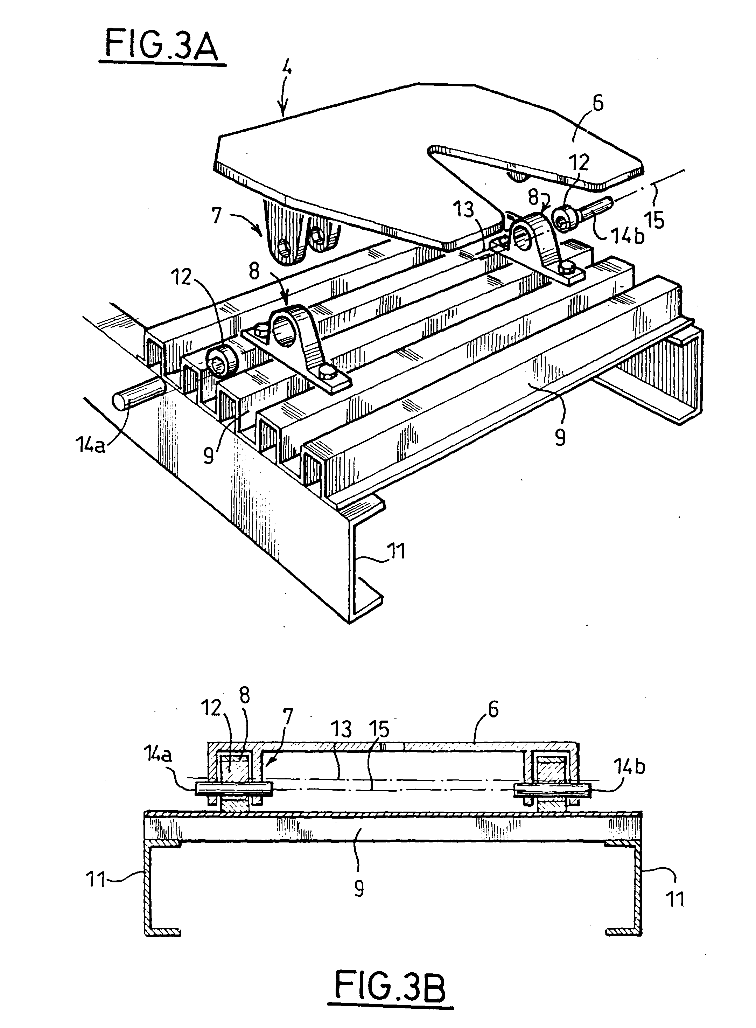

Le système d'attelage des figures 3A et 3B présente en plus deux arbres 14a, 14b coaxiaux rapportés à l'extérieur des rouleaux 12, et excentrés par rapport à ces derniers. Les chapes 7 coopèrent avec les paliers 8. Elles ne sont pas traversées par les rouleaux 12, comme dans l'exemple précédent, mais par les arbres 14a, 14b rapportés sur ces derniers. Ce système possède deux axes de rotation parallèles 13, 15, le premier étant l'axe de rotation 12 constituant les premiers éléments d'articulation du système et le second étant celui des arbres 14a, 14b, constituant les seconds éléments d'articulation du système.

Le second axe 15 débat en rotation autour du premier axe 13, autorisant simultanément un déplacement vertical et un déplacement horizontal de la remorque 3 vis-à-vis du tracteur 2, notamment en phase de freinage et d'accélération.

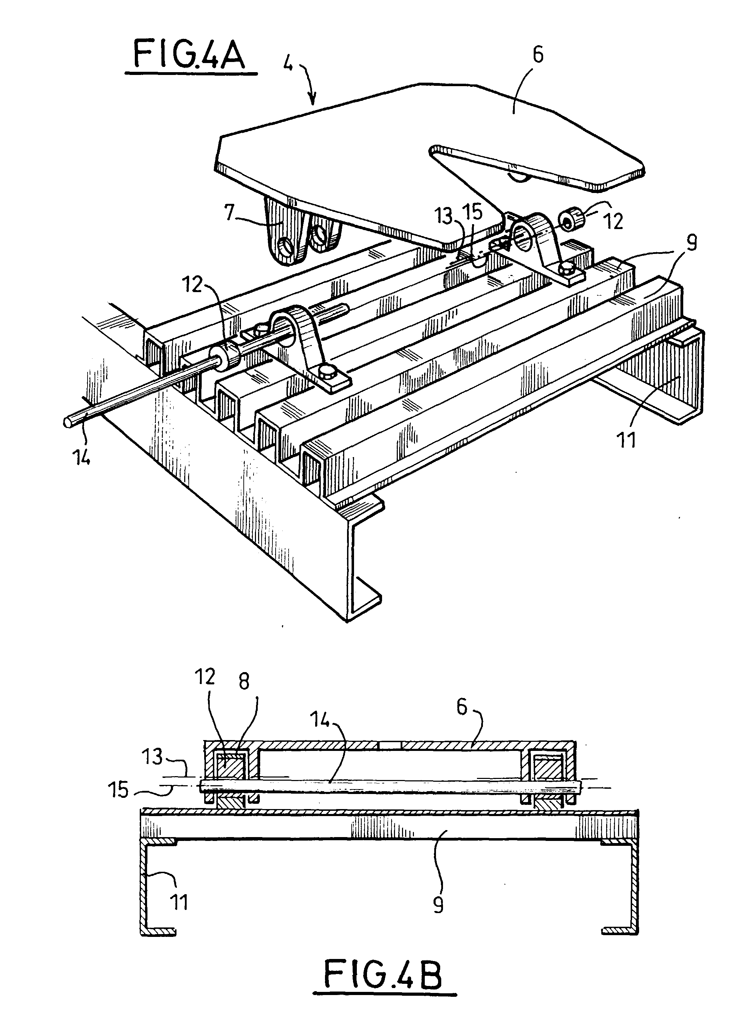

Les figures 4A et 4B, relatives à un second mode de réalisation du système d'attelage auquel peut s'appliquer l'invention, diffère du précédent uniquement en ce que les deux rouleaux 12 sont traversés par un arbre excentrique 14 d'un seul tenant. Comme dans l'exemple précédent, l'appui de sellette 6 pivote autour de l'axe secondaire 15 lors du freinage et de l'accélération. Il se déplace horizontalement et verticalement, entraînant les premiers éléments d'articulation 12 en rotation autour de l'arbre primaire 13 par l'intermédiaire de l'arbre 14, constituant le second élément d'articulation du système.

Dans le cas des figures 3A et 3B, comme dans celui des figures 4A et 4B, des capteurs de déplacement judicieusement placés, non représentés sur ces schémas, peuvent évaluer les déplacements horizontal et vertical de l'appui de sellette 6 ainsi que l'angle de déplacement de l'axe secondaire 15 par rapport à l'axe primaire 13 en situation de freinage ou d'accélération, par rapport à une situation de repos correspondant à l'arrêt du véhicule 1, ou à son déplacement à vitesse constante sur un terrain plat.

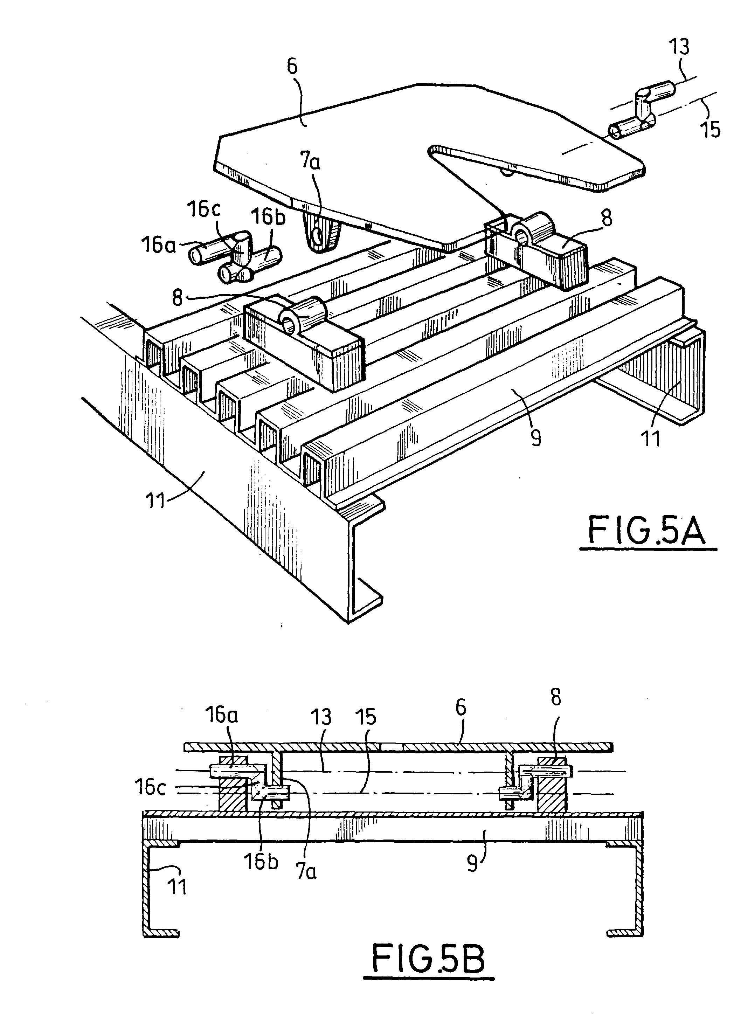

La sellette 4 de la figure 5 ne présente pas de rouleaux, mais uniquement des arbres 16 de type particulier puisqu'ils sont constitués de deux bouts d'arbres parallèles 16a, 16b constituant respectivement les premier et second élément d'articulation mentionnés plus haut. Les arbres 16a, 16b sont parallèles et non coaxiaux. Ils sont réunis par un raccord transversal 16c. Chaque premier élément d'articulation 16a, engagé dans un palier 8, définit l'axe de rotation primaire 13 de la sellette 4, tandis que le second élément d'articulation 16b engagé dans une oreille 7a définit l'axe de rotation secondaire 15 de la sellette 4. Comme précédemment, il est possible de mesurer les déplacements de l'axe secondaire 15 autour de l'axe primaire 13, à l'aide de capteurs non représentés.

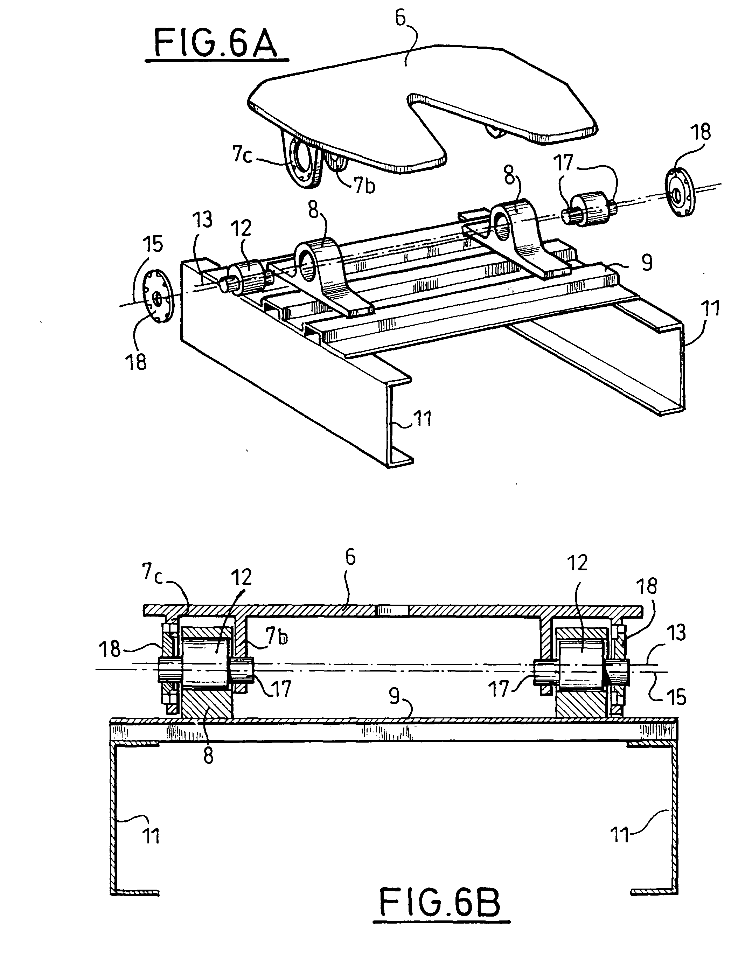

Enfin, les figures 6A et 6B proposent une sellette 4 à double axe de rotation 13, 15 selon laquelle les rouleaux 12 sont munis sur chacune de leurs faces d'un bout d'arbre ou tenon 17. Les quatre arbres 17 du dispositif sont alignés de façon à définir un axe secondaire 15 excentré par rapport à l'axe primaire 13.

Chaque arbre 17 est engagé dans une face 7a, 7b d'une chape 7, les deux arbres extérieurs pénétrant en plus à l'intérieur d'un carter 18 qui recouvre la face extérieure 7c de chaque chape. Ici encore, l'appui de sellette 6 pivote autour de l'axe secondaire 15 défini par les arbres 17, constituant les seconds éléments d'articulation. Les arbres 17 entraînent en rotation les rouleaux 12 constituant les premiers éléments d'articulation autour de l'axe primaire 13, selon un angle $\alpha$ qui peut être déterminé à l'aide de capteurs.

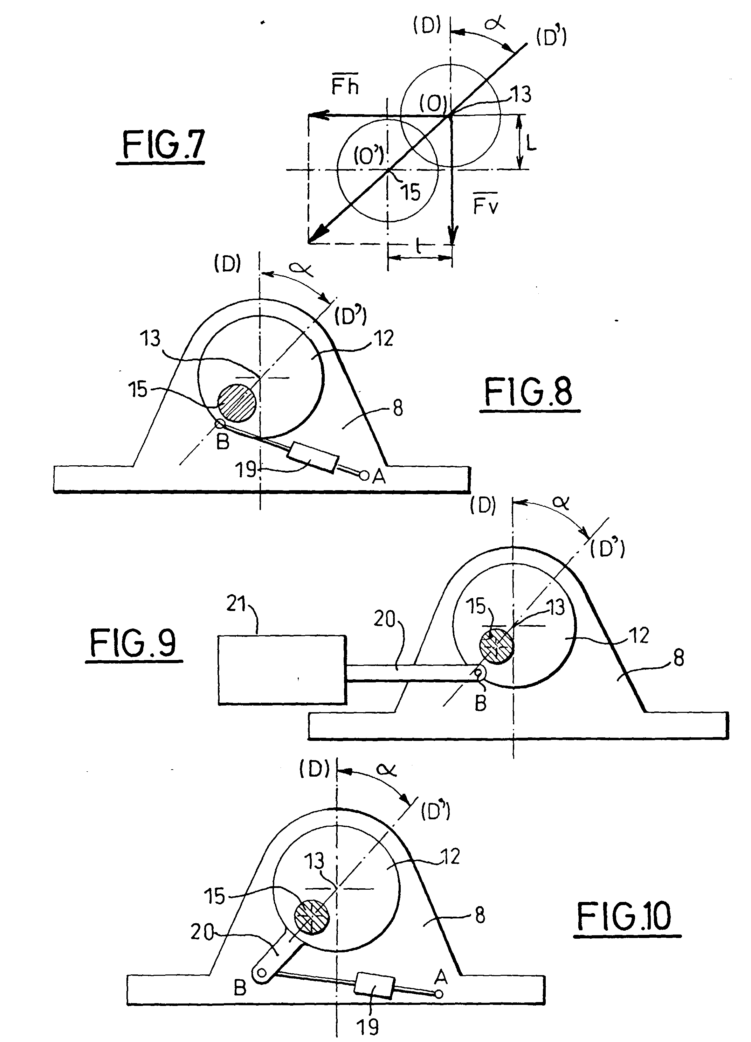

La figure 7 illustre la situation de l'un quelconque des systèmes d'attelage des figures 3 à 6 en situation de freinage. Ce schéma montre que l'angle $\alpha$ de rotation de la semelle 6 autour de l'axe primaire O (13), correspondant au déplacement angulaire de l'axe secondaire O' (15) autour de celui-ci, est lié géométriquement à la distance H séparant les deux axes 13, 15, aux déplacements horizontal I et vertical L du second axe 15, et physiquement aux forces horizontale Fh et verticale Fv transmises par la remorque 3 à la sellette 4, par les relations suivantes :

$$\sin\alpha = \frac{I}{H} \ , \ \cos\alpha = \frac{L}{H} \ \text{et tg} \ \alpha = \frac{Fh}{Fv}$$

Comme indiqué précédemment, lorsque le convoi I est en situation de freinage, en situation d'accélération, ou roule sur une pente, l'angle $\alpha$ joignant la droite joignant les axes O, O' (16, 15) et la verticale (D) est non nul, et peut être évalué à l'aide de capteurs.

L'invention vise notamment à optimiser le pilotage du freinage d'une remorque en tenant compte directement des efforts verticaux Fv et horizontaux Fh exercés par la remorque sur la sellette 4 en considérant, que le freinage du convoi I est parfaitement équilibré, c'est-à-dire que l'adhérence au sol de la remorque 3 est équivalente à celle du véhicule tracteur 2, lorsque la relation suivante :

$$\frac{Fh}{Fv} = \frac{x''}{g}$$

dans laquelle x'' est la décélération du convoi, et g l'accélération de la pesanteur est vérifiée. Conformément à l'invention, la mesure de $\alpha$ de L ou de I, effectuées à l'aide d'un des systèmes de figures 3 à 6, et la mesure de x'' effectuée à l'aide d'un capteur de décélération approprié ou issue de tout autre système installé sur le tracteur, sont exploitées pour piloter le freinage de la remorque de façon à conserver la relation ci-dessus.

La figure 8 montre que l'angle $\alpha$ peut être mesuré par tout capteur approprié 19, fixé d'une part en un point A fixe par rapport au tracteur, par exemple sur le palier 8, et d'autre part en un point B du dispositif, solidaire en rotation de l'axe secondaire 15 autour de l'axe primaire 13, par exemple sur le rouleau 12 pour les dispositifs illustrés par les figures 3A à 4B, ou sur les éléments 16 et 17 pour les dispositifs illustrés par les figures 5A à 6B.

Le capteur 19 utilisé peut être aussi bien un capteur angulaire mesurant directement l'angle $\alpha$, qu'un capteur de déplacement rectiligne, permettant de déterminer l'angle $\alpha$, en fonction de positions de référence des points A et B et de la variation de la distance AB. Bien entendu, la disposition du capteur 19 illustrée par la figure 8 ne présente aucun caractère limitatif. L'angle $\alpha$ étant mesuré, cette information peut-être exploitée par le système de commande du freinage afin de contrôler la décélération du convoi pour que la relation indiquée plus haut :

$$\frac{Fh}{Fv} = \frac{x''}{g}$$

soit vérifiée.

Comme le montre la figure 9, l'information relative au déplacement angulaire $\alpha$ de l'axe secondaire 15 autour de l'axe primaire 13, peut également être utilisée pour commander directement un composant du système de commande de freinage de la remorque 21, à l'aide d'une biellette de commande 20, fixée comme le point d'accrochage mobile du capteur 19 de la figure 8, en un point B solidaire en rotation de l'axe secondaire 15 autour de l'axe primaire 13.

Enfin, la figure 10 fait apparaître la possibilité d'amplifier le déplacement du point 3 d'accrochage mobile du capteur 19 (ou de la biellette 20), en éloignant celui-ci de l'axe primaire 13, par exemple à l'aide d'un levier 21 fixé sur le rouleau 12, ou de façon plus générale, sur toute pièce solidaire en rotation de l'axe secondaire 15 autour de l'axe primaire 13.

En conclusion, l'invention propose un ensemble de dispositions permettant d'établir un contrôle de freinage de remorque à partir d'une évaluation directe du rapport entre l'effort horizontal et l'effort vertical exercé par celle-ci sur sa sellette d'attelage. Sans sortir du cadre de l'invention tel que défini par les revendications, ces dispositions sont applicables séparément ou en combinaison sur d'autres types de sellettes que celles qui sont décrites ci-dessus à titre d'exemples non limitatifs.

## Revendications

1. Procédé de contrôle du freinage d'une remorque de véhicule routier en fonction du rapport entre l'effort horizontal (Fh) et l'effort vertical (Fv) exercés par celle-ci sur son système d'attelage (4), selon lequel on mesure le déplacement angulaire (α) d'un premier élément d'articulation (12, 16a) entraîné en rotation autour d'un axe primaire (13) par un second élément (14, 14a, 14b, 16b, 17) solidaire de celui-ci portant un axe secondaire (15) autour duquel pivote l'élément d'appui (6) du système d'attelage lors du freinage ou de l'accélération, caractérisé en ce qu'on évalue l'angle (α) entre la droite joignant les deux axes (13, 15) et la verticale (D), à l'aide d'un capteur (19) fixé d'une part en un point fixe A du véhicule tracteur et d'autre part en un point B solidaire en rotation de l'axe secondaire (15) autour de l'axe primaire (13).

2. Procédé de contrôle selon la revendication 1 ou 2, caractérisé en ce que le déplacement angulaire (α) est déterminé par la mesure du déplacement horizontal (l) ou vertical (L) d'un point B fixe par rapport au premier élément d'articulation (12, 16a).

3. Procédé de contrôle selon la revendication 1 ou 2, caractérisé en ce que la consigne de commande du système de freinage vise à établir la relation Fh/Fv = x"/g dans laquelle g est l'accélération de la pesanteur, et x" la décélération du convoi.

4. Dispositif de contrôle du freinage d'une remorque de véhicule routier en fonction du rapport entre l'effort horizontal (Fh) et l'effort vertical (Fv) exercés par celle-ci sur son système d'attelage (4) comportant un premier élément (12, 16a) tournant autour d'un axe primaire (13) fixe par rapport au véhicule tracteur et entraîné en rotation autour de celui-ci lors du freinage et de l'accélération par un second élément d'articulation (14 14a, 14b, 16b, 17 solidaire du premier et autorisant le débattement de la remorque autour d'un axe secondaire (15) décalé par rapport à l'axe primaire (13), caractérisé en ce qu'il comporte un capteur (19) fixé d'une part en un point fixe A par rapport au tracteur, et d'autre part en un point B solidaire en rotation de l'axe secondaire (15) autour de l'axe primaire (13) de façon à évaluer l'angle (α) entre la droite joignant les deux axes (13, 15), et la verticales (D).

5. Dispositif de contrôle du freinage remorque de véhicule routier, en fonction du rapport entre l'effort horizontal (Fh) et l'effort vertical (Fv) exercés par celle-ci sur son système d'attelage (4) comportant un premier élément (12), 16a) tournant autour d'un axe primaire (13) fixe par rapport au véhicule tracteur et entraîné en rotation autour de celui-ci lors du freinage et de l'accélération par un second élément d'articulation (14 14a, 14b, 16b, 17) solidaire du premier et autorisant le débattement de la remorque autour d'un axe secondaire (15), décalé par rapport à l'axe primaire (13), comportant une biellette de commande (20) articulée sur le premier élément d'articulation (12, 16a), caractérisé en ce que l'information relative au déplacement angulaire (α) de la droite joignant les deux axes est utilisée à l'aide de la biellette (20) pour agir directement sur un composant de système de freinage de la remorque.

6. Dispositif selon la revendication 4 ou 5, caractérisé en ce que le point d'accrochage mobile (B) du capteur (19) ou de la biellette (20) est éloigné de l'axe primaire (13) par un levier (20) rapporté sur le premier élément d'articulation (12, 16a).

7. Dispositif selon l'une des revendications 4 à 6, caractérisé en ce que les premiers éléments d'articulation sont constitués par des rouleaux (12) engagés dans des paliers (8) solidaires du véhicule de traction (2), et en ce que les seconds éléments d'articulation sont constitués par au moins un arbre (14, 14a, 14b, 17) s'étendant latéralement à partir des rouleaux (12).

8. Dispositif selon l'une des revendications 4 à 6 caractérisé en ce que les premiers éléments d'articulation sont constitués par des rouleaux (12) engagés dans les paliers (8) solidaires de la remorque (3), et en ce que les seconds éléments d'articulation sont constitués par au moins un arbre (14, 14a, 14b, 17) s'étendant latéralement à partir des rouleaux (12).

9. Dispositif selon l'une des revendications 4 à 6 caractérisé en ce que les premiers éléments d'articulation sont constitués par des arbres (16a) engagés dans les paliers (8), et en ce que les seconds éléments d'articulation sont également constitués par des arbres (16b), décalés axialement par rapport aux premiers.

**Patentansprüche**

1. Verfahren zur Kontrolle des Bremsverhaltens des Anhängers eines Lastzuges als Funktion des Verhältnisses zwischen der waagrechten Kraft (Fh) und der senkrechten Kraft (Fv), die von diesen auf die Anhängevorrichtung (4) ausgeübt werden, wobei die Winkelverschiebung (α) eines ersten Gelenkteiles (12, 16a) gemessen wird, das sich um eine erste Achse (13) dreht, mittels eines zweiten Teiles (14, 14a, 14b, 16b, 17), das fest mit ihm verbunden ist und das eine zweite Achse (15) trägt, um die das Stützteil (6) der Anhängevorrichtung während des Bremsvorgangs oder während eines Beschleunigungsvorgangs schwenkt, dadurch gekennzeichnet, dass der Winkel (α) zwischen der Geraden die beiden Achsen (13, 15) verbindet und der Senkrechten (D) mittels eines Fühlers (19) gemessen wird, der einerseits an einem feststehenden Punkt A des Zugfahrzeugs und andererseits an einem Punkt B befestigt ist, der drehfest mit der um die erste Achse 13 drehbar angeordneten zweiten Achse 15 verbunden ist.

2. Verfahren nach Anspruch 1, dadurch gekennzeichnet, dass die Winkelverschiebung (α) bestimmt wird durch die Messung der waagrechten Verschiebung (l) oder der senkrechten Verschiebung (L) eines Punktes B, der bezüglich des ersten Gelenkteils (12, 16a) feststeht.

3. Verfahren nach Ansprüchen 1 oder 2, dadurch gekennzeichnet, dass der Steuerwert des Bremssystems darauf abzielt, die Gleichung Fh/Fv = x''/g zu erfüllen, in der g die Erdbeschleunigung und x'' die Verzögerung des Lastzuges ist.

4. Vorrichtung zur Kontrolle des Bremsverhaltens des Anhängers eines Lastzuges als Funktion des Verhältnisses zwischen der waagrechten Kraft (Fh) und der senkrechten Kraft (Fv), die von diesen auf die Anhängevorrichtung (4) ausgeübt werden mit einem ersten Teil (12, 16a), das sich um eine erste Achse (13) dreht, die bezüglich des Zugfahrzeugs feststeht und das um diese verdreht wird während des Bremsvorgangs und der Beschleunigung durch ein zweites Gelenkteil (14, 14a, 14b, 16b, 17), das fest mit dem ersten verbunden ist und ein Verschwenken des Anhängers um eine zweite Achse (15) ermöglicht, die bezüglich der ersten Achse (13) versetzt angeordnet ist, dadurch gekennzeichnet, dass sie einen Fühler (19) aufweist, der einerseits an einem bezüglich des Zugfahrzeugs feststehenden Punkt A befestigt ist und andererseits an einem Punkt B, der drehfest mit der zweiten Achse (15), die sich um die Achse (13) herum dreht, derart befestigt ist, dass der Winkel (α) zwischen der die beiden Achsen (13, 15) verbindenden Geraden und der senkrechten (D) ermittelt werden kann.

5. Vorrichtung zur Kontrolle des Bremsverhaltens des Anhängers eines Lastzuges als Funktion des Verhältnisses zwischen der waagrechten Kraft (Fh) und der senkrechten Kraft (Fv), die von diesen auf die Anhängevorrichtung (4) ausgeübt werden mit einem ersten Teil (12, 16a), das sich um eine erste Achse (13) dreht, die bezüglich des Zugfahrzeugs feststeht und das um diese verdreht wird während des Bremsvorgangs und der Beschleunigung durch ein zweites Gelenkteil (14, 14a, 14b, 16b, 17), das fest mit dem ersten verbunden ist und ein Verschwenken des Anhängers um eine zweite Achse (15) ermöglicht, die bezüglich der ersten Achse (13) versetzt angeordnet ist, wobei sie einen Steuerhebel (20) aufweist, der am ersten Gelenkteil (12, 16a) angelenkt ist, dadurch gekennzeichnet, dass die die Winkelverschiebung (α) der die beiden Achsen verbindenden Geraden darstellende Information verwendet wird, um mittels des Hebels (20) direkt auf ein Bauteil des Bremssystems des Anhängers einzuwirken.

6. Vorrichtung nach Anspruch 4 oder 5, dadurch gekennzeichnet, dass der bewegliche Befestigungspunkt (B) des Fühlers (19) oder des Hebels (20) mittels einer Stange (21), die mit dem ersten Gelenkteil (12, 16a) verbunden ist, entfernt von der ersten Achse (13) angeordnet wird.

7. Vorrichtung nach einem der Ansprüche 4 bis 6, dadurch gekennzeichnet, dass die ersten Gelenkteile aus Rollen (12) bestehen, die in Lager (8) eingreifen, die fest mit dem Zugfahrzeug (2) verbunden sind und dass die zweiten Gelenkteile aus wenigstens einer Welle (14, 14a, 14b, 17) bestehen, die sich ausgehend von den Rollen (12) seitlich erstreckt.

8. Vorrichtung nach einem der Ansprüche 4 bis 6, dadurch gekennzeichnet, dass die ersten Gelenkteile aus Rollen (12) bestehen, die in Lager (8) eingreifen, die fest mit dem Anhänger (3) verbunden sind und dass die zweiten Gelenkteile aus wenigstens einer Welle (14, 14a, 14b, 17) bestehen, die sich ausgehend von den Rollen (12) seitlich erstreckt.

9. Vorrichtung nach einem der Ansprüche 4 bis 6, dadurch gekennzeichnet, dass die ersten Gelenkteile aus Wellen (16a) bestehen, die in Lager (8) eingreifen und dass die zweiten Gelenkteile ebenfalls aus Wellen (16b) bestehen, die axial bezüglich den ersten Wellen verschoben sind.

**Claims**

1. Method of control of the braking a trailer of a road vehicle according to the relationship between the horizontal loading (Fh) and the vertical loading (Fv) exerted by it upon its coupling system (4), according to which there is measurement of the angular displacement (α) of a first articulating element (12, 16a) driven in a rotational manner about a primary axis (13) by a second element (14, 14a, 14b, 16b, 17) integral therewith, having a secondary axis (15) about which the bearing element (6) of the coupling system pivots during braking or acceleration, characterised in that the angle (α) between the straight line joining the two axes (13, 15) and the vertical (D) is evaluated with the aid of a sensor (19) fixed on the one hand to a fixed point A of the towing vehicle, and on the other hand at a point B integral in rotation with the secondary axis (15) about the primary axis (13).

2. Method of control according to claim 1 or 2, characterised in that the angular displacement ($\alpha$) is determined by measurement of the horizontal displacement (l) or vertical displacement (L) of a point B fixed with respect to the first articulating element (12, 16a).

3. Method of control according to claim 1 or 2, characterised in that the control instruction of the braking system is intended to establish the relationship Fh/Fv = x"/g, in which g is the acceleration of the weight, and x" the deceleration of the articulated vehicle.

4. Device for controlling the braking of a trailer of a road vehicle according to the relationship between the horizontal loading (Fh) and the vertical loading (Fv) exerted by it upon its coupling system (4), comprising a first element (12, 16a) rotating about a primary axis (13), fixed with respect to the towing vehicle and driven in a rotational manner about it during braking and acceleration by a second articulating element (14, 14a, 14b, 16b, 17) integral with the first, and allowing travel of the trailer about a secondary axis (15) offset with respect to the primary axis (13), characterised in that it comprises a sensor (19) fixed on the one hand to a point A fixed with respect to the towing vehicle, and on the other hand at a point B integral in rotation with the secondary axis (15) about the primary axis (13) such as to evaluate the angle ($\alpha$) between the straight line joining the two axes (13, 15) and the vertical (D).

5. Device for controlling the braking of a trailer of a road vehicle according to the relationship between the horizontal loading (Fh) and the vertical loading (Fv) exerted by it upon its coupling system (4), comprising a first element (12, 16a) rotating about a primary axis (13), fixed with respect to the towing vehicle and driven in a rotational manner about it during braking and acceleration by a second articulating element (14, 14a, 14b, 16b, 17) integral with the first, and allowing travel of the trailer about a secondary axis (15) offset with respect to the primary axis (13), comprising a control rod (20) articulated on the first articulating element (12, 16a), characterised in that the information relative to the angular displacement ($\alpha$) of the straight line joining the two axes is used with the aid of the rod (20) to act directly upon a component of the trailer braking system.

6. Device according to claim 4 or 5, characterised in that the movable fastening point (B) of the sensor (19) or of the rod (20) is moved away from the primary axis (13) by a lever (20) connected to the first articulating element (12, 16a).

7. Device according to one of claims 4 to 6, characterised in that the first articulating elements are constituted by rollers (12) engaged in bearings (8) integral with the towing vehicle (2), and in that the second articulating elements are constituted by at least one shaft (14, 14a, 14b, 17) extending laterally from rollers (12).

8. Device according to one of claims 4 to 6, characterised in that the first articulating elements are constituted by rollers (12) engaged in the bearings (8) integral with the trailer (3), and in that the second articulating elements are constituted by at least one shaft (14, 14a, 14b, 17) extending laterally from rollers (12).

9. Device according to one of claims 4 to 6, characterised in that the first articulating elements are constituted by shafts (16a) engaged in the bearings (8), and in that the second articulating elements are also constituted by shafts (16b) offset axially with respect to the first ones.

FIG.1

FIG.2A

FIG.2B

## FIG.3A

## FIG.3B

FIG.4A

FIG.4B

FIG.5A

FIG.5B

FIG.6A

FIG.6B

FIG.7

FIG.8

FIG.9

FIG.10